Europäisches Patentamt

**European Patent Office**

Office européen des brevets

(11) Publication number: **0 220 146**
B1

# (12) EUROPEAN PATENT SPECIFICATION

(45) Date of publication of the patent specification:
**31.01.90**

(21) Application number: **86850338.4**

(22) Date of filing: **08.10.86**

(51) Int. Cl.⁴: **F16K 1/30**

(54) Improvements to valves for gas cylinders.

(30) Priority: **18.10.85 SE 8504907**

(43) Date of publication of application:
**29.04.87 Bulletin 87/18**

(45) Publication of the grant of the patent:
**31.01.90 Bulletin 90/5**

(84) Designated Contracting States:
**AT BE DE GB LU NL**

(56) References cited:
**DD-A- 77 141**
**DE-A- 1 961 439**
**DE-A- 2 429 071**

(73) Proprietor: **AGA AKTIEBOLAG, S-181 81 Lidingö(SE)**

(72) Inventor: **Eriksson, Erik T., Furugatan 16,
S-213 63 Malmö(SE)**

(74) Representative: **Karlzén, Bengt Erik et al, AGA AB
Patent Department, S-181 81 Lidingö(SE)**

## Description

A lift valve for high-pressure gas cylinders, primarily for oxygen gas cylinders, the valve comprising an inlet connection intended to be screwed into the gas cylinder, a valve seat between inlet and outlet passages, a movable sealing member, the valve further including an arrangment to prevent, during the opening phase, gas-rush through the valve, said arrangement comprising a tubular member disposed in the gas passage and axially movable with respect to the sealing member and urged against the member by spring means, said tubular member being arranged to provide a gap with the sealing member when moved a predetermined distance, so to allow a small gas flow through the valve during the initial phase of the opening movement.

It is previously known in this art that if a valve connection to a gas cylinder containing oxygen gas or oxygenenriched gas at high pressure is quickly opened - or "snatched open" – ignition may occur in the valve or in the equipment connected to the valve, for example a regulator. In such an event, not only may the component in question be destroyed, but such an ignition may also entail damage to other parts in the gas distribution system. In order that such ignition can take place, it is necessary that three elements be present, namely oxidation agent, fuel and ignition energy. Here, the oxygen is the oxidation agent and the valve material is the fuel. The ignition energy consists of the compression heat generated when the gas is compressed from low to high pressure. In the present case, when high-pressure oxygen is released into the valve chamber and rapidly compresses the residual oxygen in the chamber, a violent increase of the temperature of the gas will be obtained. This temperature increase may exceed the threshold ignition temperature of the material. If, for example, in a valve, oxygen is rapidly compressed from 1 bar and 20°C to 200 bar, the ultimate temperature of the gas will be of the order of magnitude of approx. 1200°C. In a valve which is made of brass and which may also contain components of other materials, ignition may take place in the event of such a rapid compression, with consequential temperature increase. In the German publication DE-A 2 429 071 is disclosed a valve of a high-pressure gas cylinder comprising an arrangement to prevent a gas rush through the valve during the initial phase of the opening movement of the valve. In the disclosed valve a part of the valve spindle is designed to surround a part of the valve cone. This part of the cone is axially movable in the spindle. The cone is urged against the spindle by spring means.

In the cone is arranged a central axial through hole.

From this hole is arranged a radial hole to the outer surface of the cone. The orifice of the radial hole is covered by the spindle when the valve is closed. In the initial phase of the valve opening movement said orifice will be set free, so that a small volume of gas will flow from the inlet to the outlet of the valve. During a further turning of the valve knob the cone will leave the valve seat and the valve will be fully opened. However, an arrangement according to the German document requires a special design of the cone and the spindle which can be complicated to achieve. A valve including this arrangement will therefore be difficult and expensive to manufature.

The object of the present invention is to realise an improvement of the arrangement in the valve which prevents gasrush rush through the valve and, as a result, the rapid compression of the gas. The present invention is, here, essentially characterised in that a tubular member is a tubular sleeve arranged in the gas passage between the valve seat and the inlet of the valve, the one end of said sleeve abutting, when the valve is closed, against the movable sealing member of the valve, and the other end of said sleeve abutting against a spring member, said sleeve being of such a diameter that a gap is obtained between the outer surface of the sleeve and the gas passage wall, the end of said sleeve facing said spring member is provided with a flange member which, when the valve is open, is disposed to abut against a first recess in the gas passage, and which is provided with at least one aperture allowing continuous gas flow from the valve inlet to the gap, the sleeve, in the initial phase of the opening movement of the valve over said predetermined distance, abutting against the movable sealing member such that a slight volume of gas flows through the gap to the valve outlet and, on further opening movement, the movable sealing member departs from the sleeve and maximum gas flow is obtained through the valve. The invention is further characterised in that the gap width and gap length are dimensioned such that, in the above-mentioned initial phase, the rising time of the gas flow to maximum flow is of such duration that the gas compressed in the valve housing during the rising time of the gas flow will attain a temperature which is lower than the threshold ignition temperature of the valve material.

BRIEF DESCRIPTION OF THE ACCOMPANYING DRAWINGS

The nature of the present invention and its aspects will be more readily understood from the following brief description of the accompanying Drawings, and discussion relating thereto.

In the accompanying Drawings:

Fig. 1 is a longitudinal section through a conventional gas cylinder valve;

Fig. 2 is a cross-section through the inlet connection and component parts inserted therein; and

Fig. 3 illustrates graphically the gas flow through the valve, on the one hand for a conventional valve, and, on the other hand, for a valve fitted with the arrangement according to the present invention.

DESCRIPTION OF PREFERRED EMBODIMENT

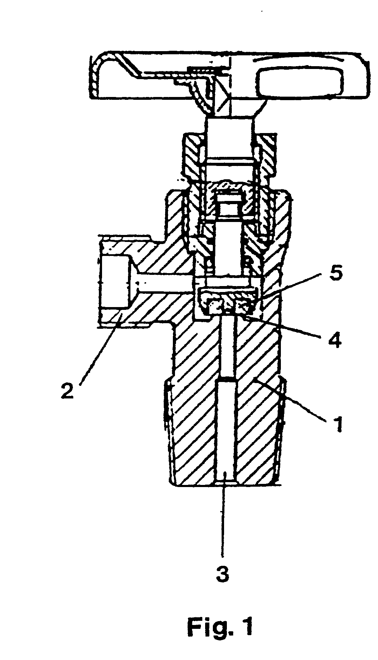

Referring to the Drawings, Fig. 1 shows a cylinder valve. This comprises an inlet connection 1 intended to be screwed into a gas cylinder, and an outlet connection 2 intended for connection to an outlet conduit. Gas from the cylinder passes through the gas passage 3 and, if the valve is open, past the valve seat 4 and out through the channel in the outlet connection 2. The valve is closed by turning the valve knob, in which event the movable sealing member 5 is, by means of the operating mechanism of the valve (in the illustrated embodiment a spindle and ball), urged against the seat 4 and thereby closes the gas passage 3. When the valve is opened, the movable sealing member 5 is, thus, lifted from the valve seat 4.

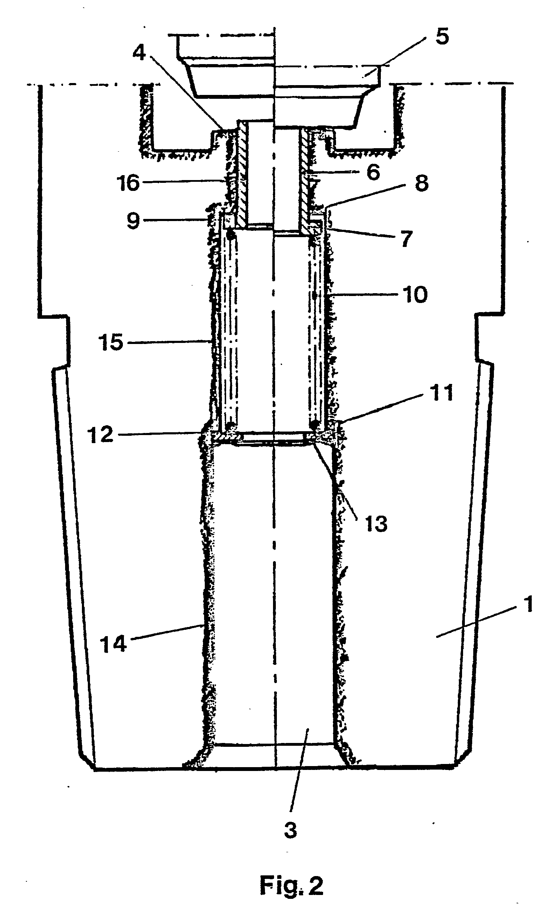

Fig. 2 illustrates the outlet connection 1 and the lower portion of the movable sealing member 5 when the valve is opened and when the valve is closed, in each half of the Drawing, respectively. Bores 14 and 15 are provided in the gas passage 3 in the outlet connection. A sleeve-shaped member 6 is disposed in the gas passage most proximal the valve seat 4. This member is provided with a flange 7 at its end facing away from the valve seat. The flange is provided with one or more apertures 9. A spring 10 is disposed in the bore 15 in the gas passage, the flange 7 abutting against the upper end of the spring. The opposite end of the spring 10 abuts against a backing washer 11 which is disposed in the bore 14. In the illustrated embodiment, the washer 11 is held in place by a locking washer 13. However, it is also conceivable without departing from the spirit and scope of the present invention to thread the backing washer in place in the bore.

The sleeve 6 is disposed to be axially movable in the gas passage. Moreover, the sleeve 6 is of such diameter that a gap 16 is formed between the sleeve and the gas passage wall. However, movement towards the valve seat is restricted by the end surface 8 of the bore 15. When the valve is closed (the right-hand half of Fig. 2), the end surface of the sleeve 6 will, because of the action of the spring 10, abut against the movable sealing member 5, in which case no gas can pass from the gas passage into the valve housing. When the valve is opened by turning the valve knob, the movable sealing member 5 will move away from the seat 4. However, the end surface of the sleeve 6 is held urged against the movable sealing member by the action of the spring 10. The sleeve 6 will abut against the sealing member a distance which corresponds to the travel of the flange 7 to the end surface stop 8 in the gas passage. Once the movement of the sleeve has been arrested, the sealing member 5 is released and the valve is fully open (the left-hand half of Fig. 2).

During the time the sleeve 6 abuts against the sealing member 5, gas will now flow from the gas passage through the apertures 9 in the flange 7 into the gap 16 between the sleeve wall and the wall of the gas passage. Because the valve seat 4 is somewhat chamfered, viewed from the centre, a gap will be created between the seat and sealing member through which gap the gas flows out into the valve housing. During the first phase of the opening movement of the valve, there will hereby be obtained a gas flow solely through the above-described gaps. Not until the sealing member 5 has departed from the end surface of the sleeve 6 will maximum flow be obtained through the valve.

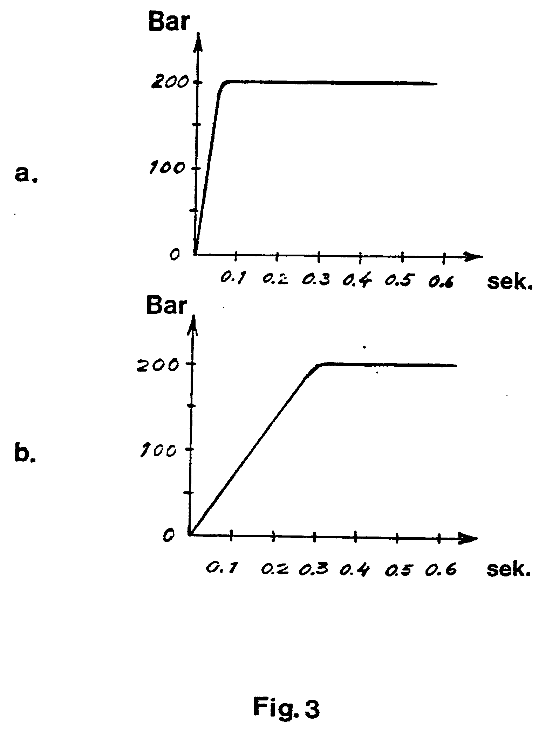

The gap between the sleeve 6 and the wall of the gas passage has been given a specific width and length, since the gas flow rate through the gap is determined by these magnitudes. The gap width and gap length are, here, dimensioned such that, during the initial phase of the opening movement of the valve, a rising time for the gas flow from zero to maximum flow is obtained which is of such duration that no "quick" compression of the gas enclosed in the valve housing will be occasioned. The ultimate temperature which the gas attains as a result of this arrangement is considerably lower than the lowest threshold ignition temperature of the valve material. Fig. 3 illustrates the rising time for the gas flow, first for a conventional valve (the upper diagram (a)), and secondly for a valve provided with the novel arrangement according to the present invention (the lower diagram (b)). As will be apparent from these diagrams, the rising time for a conventional valve is approx. 50 msec. and for a valve fitted with the novel arrangement approx. 300 msec. Hence, by the present invention it has become possible to increase the rising time by a factor of approx. 6. In order to obtain a rising time which does not give rapid, and thereby dangerous, compression, the gap width should lie in the range of from 50 to 150 μ, and the gap length in the range of from 5 to 15 mm. In the curve illustrated in Fig. 3, a gap width of 80 μ and a gap length of 10 mm were employed.

Thus, be means of the novel arrangement disclosed in the foregoing, it has become possible to avoid the rapid compression, and consequential temperature increase of the gas in the valve housing, whereby the risk of ignition has been obviated. By means of the novel arrangement as herein disclosed, there will always be obtained, during the initial phase of the opening movement of the valve, a constant rising time for the gas flow irrespective of the speed with which the valve knob is turned. As a further result of the novel arrangement as herein disclosed, this constant rising time will also be obtained irrespective of the operating mechanism disposed in the valve between the knob and the movable sealing member, thus irrespective of whether the valve comprises spindle and ball, diaphragm or bellows-type arrangement.

## Claims

1. A lift valve for high-pressure gas cylinders, primarily for oxygen gas cylinders, the valve comprising an inlet connection (1) intended to be screwed into the gas cylinder, a valve seat (4) between inlet and outlet passages (3, 2), a movable sealing member (5), said valve further including an arrangement to prevent, during the opening phase, gas-rush through the valve, said arrangement comprising a tubular member (6) disposed in the gas passage and axially movable with respect to the sealing member (5) and urged against the member by spring means (10), said tubular member (6) being arranged to provide a gap with the sealing member (5) when moved a predetermined distance, so to allow a small gas flow through the valve during the initial phase of the opening movement, characterised in that said tubular member (6) is a tubular sleeve (6) arranged in the gas passage between the valve seat (4) and the inlet (3) of the valve, the one end of said sleeve abutting, when the valve is closed, against the movable sealing member (5) of the valve, and the other end of said sleeve abutting against a spring member (10), said sleeve being of such a diameter that a gap (16) is obtained between the outer surface of the sleeve and the gas passage wall, the end of said sleeve (6) facing said spring member (10) is provided with a flange member (7) which, when the valve is open, is disposed to abut against a first recess (8) in the gas passage, and which is provided with at least one aperture (9) allowing continuous gas flow from the valve inlet (3) to the gap (16), the sleeve (6), in the initial phase of the opening movement of the valve over said predetermined distance, abutting against the movable sealing member (5) such that a slight volume of gas flows through the gap (16) to the valve outlet (2) and, on further opening movement, the movable sealing member (5) departs from the sleeve (6) and maximum gas flow is obtained through the valve.

2. The valve as claimed in claim 1, characterised in that gap width and gap length are dimensioned such that, in said initial phase, the rising time of the gas flow to maximum flow is of such duration that the gas compressed in the valve housing during the rising time will attain a temperature which is lower than the lowest threshold ignition temperature of the valve material.

3. The arrangement as claimed in claim 3, characterised in that the gap width lies in the range of from 50 to 150 μ and the gap length in the range of from 5 to 15 mm.

4. The arrangement as claimed in claim 3, characterised in that the gap width is preferably 80 μ and the gap length preferably 10 mm.

## Patentansprüche

1. Druckventil für Hochdruckgasflaschen, insbesondere für Sauerstoffgasflaschen, mit einem Einlaßanschluß (1) zum Einschrauben in die Gasflasche, einem zwischen Einlaß- und Auslaßkanälen (3, 2) angeordneten Ventilsitz (4) und einem beweglichen Dichtungselement (5), des weiteren mit einer Einrichtung zum Verhindern eines plötzlichen Gasausströmens aus dem Ventil während der Öffnungsphase, welche Einrichtung ein röhrenförmiges Element (6) aufweist, welches in dem Gasdurchlaß angeordnet, in bezug auf das Dichtungselement (5) axial beweglich und durch Federmittel (10) gegen das Element gedrückt ist, wobei das röhrenförmige Element (6) derart angeordnet ist, daß es mit dem Dichtungselement (5) einen Spalt bildet, wenn es um eine vorbestimmte Distanz bewegt wird, um so während der Anfangsphase der Öffnungsbewegung einen geringen Gasfluß durch das Ventil zu erlauben, dadurch gekennzeichnet, daß das röhrenförmige Element (6) eine röhrenförmige Hülse (6) ist, welche in dem Gasdurchlaß zwischen dem Ventilsitz (4) und dem Einlaß (3) des Ventils angeordnet ist, wobei das eine Ende der Hülse bei geschlossenem Ventil an dem beweglichen Dichtungselement (5) des Ventils und das andere Ende der Hülse an einem Federelement (10) anliegt, wobei die Hülse einen derartigen Durchmesser aufweist, daß zwischen der äußeren Oberfläche der Hülse und der Wand des Gasdurchlasses ein Spalt (16) erhalten wird, wobei das dem Federelement (10) zugewandte Ende der Hülse (6) mit einem Flansch (7) versehen ist, welcher derart angeordnet ist, daß er, wenn das Ventil geöffnet ist, gegen eine erste Vertiefung (8) in dem Gasdurchlaß anliegt, und welcher mit wenigstens einer Öffnung (9) versehen ist, welche einen kontinuierlichen Gasfluß von dem Ventileinlaß (3) zu dem Spalt (16) zuläßt, wobei die Hülse (6) in der Anfangsphase der Öffnungsbewegung des Ventils über die vorbestimmte Distanz an das bewegliche Dichtungselement (5) anschlägt, so daß ein geringes Gasvolumen durch den Spalt (16) zu dem Ventilauslaß (2) fließt, und daß sich, bei weiterer Öffnungsbewegung, das bewegliche Dichtungselement (5) von der Hülse (6) entfernt und maximaler Gasfluß durch das Ventil erhalten wird.

2. Ventil nach Anspruch 1, dadurch gekennzeichnet, daß Spaltbreite und Spaltlänge derart bemessen sind, daß, in der Anfangsphase, die Anstiegszeit des Gasflusses bis zum maximalen Fluß von einer derartigen Dauer ist, daß das während der Anstiegszeit in dem Ventilgehäuse komprimierte Gas eine Temperatur annimmt, die niedriger als die niedrigste Zündschwellentemperatur des Ventilmaterials ist.

3. Anordnung nach Anspruch 2, dadurch gekennzeichnet, daß die Spaltbreite in dem Bereich von 50 bis 150 μ und die Spaltlänge in dem Bereich von 5 bis 15 mm liegen.

4. Anordnung nach Anspruch 3, dadurch gekennzeichnet, daß die Spaltbreite vorzugsweise 80 μ und die Spaltlänge vorzugsweise 10 mm sind.

## Revendications

1. Robinet à levée pour bouteilles de gaz à haute pression principalement pour bouteilles d'oxygène gazeux, comprenant un raccord d'entrée (1) destiné à être vissé dans la bouteille de gaz, un siège de robinet (4) entre les passages d'entrée et de sortie (3, 2), un obturateur mobile (5), ledit robinet comprenant, en outre, un dispositif pour empêcher, au cours de la phase d'ouverture, le passage brusque du gaz à travers le robinet, ce dispositif comprenant un élément tubulaire (6) placé dans le passage de gaz, pouvant se déplacer dans le sens axial par rapport à l'obturateur (5) et sollicité contre cet obturateur par un ressort (10), cet élément tubulaire (6) étant disposé de façon à créer un espace avec l'obturateur (5) quand celui-ci se déplace d'une distance prédéterminée de façon à permettre un faible débit de gaz à travers le robinet au cours de la phase initiale du mouvement d'ouverture, caractérisé en ce que ledit élément tubulaire (6) est une douille tubulaire (6) disposée dans le passage de gaz entre le siège (4) et l'entrée (3) du robinet, une extrémité de la douille étant en butée contre l'obturateur mobile (5) du robinet lorsque celui-ci est fermé et l'autre extrémité de la douille prenant appui sur un ressort (10), la douille ayant un diamètre tel qu'un espace (16) existe entre la surface extérieure de la douille et la paroi du passage du gaz, l'extrémité de la douille (6) tournée vers le ressort (10) étant pourvue d'une collerette (7) qui, lorsque le robinet est ouvert, est en butée contre un premier redan (8) dans le passage de gaz et est pourvue d'au moins une ouverture (9) permettant un débit de gaz continu depuis l'entrée (3) du robinet vers l'espace (16), la douille (6) étant en butée contre l'obturateur mobile (5) au cours de la phase initiale du mouvement d'ouverture du robinet de ladite distance prédéterminée de façon qu'un faible volume de gaz s'écoule à travers l'espace (16) vers la sortie (2) du robinet et que, lorsque le mouvement continue, l'obturateur mobile (5) s'écarte de la douille (6) et un débit de gaz maximal est obtenu à travers le robinet.

2. Robinet suivant la revendication 1, caractérisé en ce que la longueur et la largeur dudit espace sont telles que, au cours de ladite phase initiale, le temps d'augmentation du débit de gaz jusqu'à sa valeur maximale soit d'une durée telle que le gaz comprimé dans le corps du robinet au cours de cette période d'augmentation atteigne une température qui est inférieure à la température d'inflammation limite la plus basse du matériau du robinet.

3. Dispositif selon la revendication 2, caractérisé en ce que la largeur de l'espace est comprise entre 50 et 150 µm et sa longueur entre 5 et 15 mm.

4. Dispositif suivant la revendication 3, caractérisé en ce que la largeur de l'espace est de préférence de 80 µm et sa longueur de 10 mm.

EP 0 220 146 B1

Fig. 1

Fig. 2

Fig. 3